Europäisches Patentamt

European Patent Office

Office européen des brevets

(11) Veröffentlichungsnummer: **0 220 561**
**A1**

(12) **EUROPÄISCHE PATENTANMELDUNG**

(21) Anmeldenummer: 86113963.2

(51) Int. Cl.⁴: **B23K 9/18**

(22) Anmeldetag: 08.10.86

(30) Priorität: 16.10.85 CH 4459/85

(43) Veröffentlichungstag der Anmeldung:
06.05.87 Patentblatt 87/19

(84) Benannte Vertragsstaaten:
AT BE DE ES FR GB IT LU NL SE

(71) Anmelder: **Schweissindustrie Oerlikon Bührle AG**
**Birchstrasse 230**
**CH-8050 Zürich(CH)**

(72) Erfinder: **Scholz, Erhard**
**Dr. Semmelweis-Strasse 2**
**D-6719 Eisenberg(DE)**
Erfinder: **Baach, Hans, Dr.**
**Grafschaftstrasse 80**
**CH-8172 Niederglatt(DE)**
Erfinder: **Hoffmann, Ewald H. D.**
**Otto-Hahn-Strasse 62**
**D-4018 Langenfeld(DE)**
Erfinder: **Rotter, Udo H.**
**Johannesstrasse 47**
**D-4358 Haltern(DE)**

(74) Vertreter: **EGLI-EUROPEAN PATENT ATTORNEYS**
**Horneggstrasse 4**
**CH-8008 Zürich(CH)**

(54) Verfahren zum Unterpulverschweissen mittels Mehrelektrodenschweissung.

(57) Bei der Mehrelektrodenschweissung durch das Unterpulverschweissverfahren werden zwei oder mehr Elektroden hintereinander angeordnet. Hierbei wird mindestens die -in Schweissrichtung gesehen -zweite Elektrode als Massivband oder Füllband ausgebildet. Dadurch kann die Schmelzleistung gegenüber Schweissanlagen mit Mehrdrahtanordnung gesteigert werden, ohne die Zahl der Elektroden zu erhöhen. Gleichzeitig wird jedoch eine Verringerung des Einbrandes erreicht, so dass die Zumischung von Grundwerkstoff zum Schweissgut verringert wird.

FIG. 1

1. Kopf  2. Kopf  3. Kopf  4. Kopf

S

Schweissrichtung

# 0 220 561

## Verfahren zum Unterpulverschweissen mittels Mehrelektrodenschweissung

Die Erfindung betrifft ein Verfahren zum Unterpulverschweissen von Nahtfugen an metallischen Werkstücken mittels Mehrelektrodenschweissung, bei welchem zwei und mehr Elektroden hintereinander angeordnet werden, mit deren einzelnen elektrischen Lichtbogen gleichzeitig eine gemeinsame, von geschmolzenem Schweisspulver überdeckte Schmelzzone gebildet wird, und die Anwendung dieses Verfahrens. Es ist bekannt, beim Unterpulverschweissverfahren die Schmelzleistung dadurch zu erhöhen, dass die Schweissung mit mindestens zwei Schweissdrähten durchgeführt wird (EP 0 116 664). Mit den Schweissdrähten werden gleichzeitig elektrische Lichtbogen erzeugt, mit denen ein gemeinsames Schweissbad unter dem Schweisspulver unterhalten wird. Hierbei wird eine der Drahtelektroden, vorzugsweise die zweite Drahtelektrode, mit den gewünschten Legierungszusätzen legiert, während die erste Drahtelektrode und die weiteren Drahtelektroden unlegiert oder mittellegiert sind. Bei den legierten Schweissdrähten, die in bestimmten Anwendungsfällen auch Mikrolegierungselemente enthalten können, handelt es sich in der Regel um Fülldrahtelektroden, mit denen sich die metallurgischen Anforderungen präziser verwirklichen lassen.

Mit der Zwei-oder Mehrdrahtelektrodenschweissung kann zwas die Abschmelzleistung gegenüber der Eindrahtschweissung gesteigert werden, jedoch muss zur Vermeidung einer nachteilig grossen Einbrandtiefe ein möglichst kleiner Durchmesser der Schweissdrähte gewählt werden, wodurch die Stärke des Schweissstromes eine entsprechende Begrenzung erfährt.

Zwar kann die Zahl der Drahtelektroden vergrössert werden, jedoch ergeben sich dadurch aufwendige Konstruktionen für die Schweissanlage. Es hat sich aus der Erfahrung ergeben, dass wirtschaftliche Schweissanlagen drei oder höchstens vier Schweissköpfe aufweisen.

Hier setzt nun die Erfindung ein, das Verfahren der eingangs beschriebenen Art so weiter zu entwickeln, dass noch grössere Abschmelzleistungen erreicht werden können, ohne dass dadurch die Zahl der Schweissköpfe vergrössert werden müsste.

Dies Aufgabe wird gemäss der Erfindung dadurch gelöst, dass in der jeweils gewählten Elektrodenanordnung mindestens eine als Bandelektrode ausgebildete Elektrode angeordnet wird. Zweckmässig wird hierbei die Bandelektrode als Füllband mit einer im Bandinnern eingebrachten Pulverfüllung ausgebildet.

Die Erfindung umfasst weiter eine Anwendung des erfindungsgemässen Verfahrens zur Erzielung eines Einbrandprofiles, das durch eine Uebergangszone mit ausschliesslich konvex gewölbten Rändern gekennzeichnet ist.

Die Erfindung wird anhand der Zeichnung beispielsweise beschrieben und erläutert. Es zeigen

Fig. 1 eine schematisch dargestellte Anordnung der Schweissköpfe für eine Schweissanlage mit 4 Schweissköpfen, wovon der erste Kopf für die Aufnahme einer Drahtelektrode und der zweite bis vierte Kopf für die Aufnahme von Bandelektroden ausgebildet ist,

Fig. 2 vier verschiedene Anordnungen der Elektroden der erfindungsgemässen Mehrelektrodenanordnung,

Fig. 3 einen Schnitt einer Schweissnaht bei Vorbereitung der Schweissfuge in Doppel-Y-Naht, die mit einer Elektrodenanordnung aus Massiv-oder Fülldrähten geschweisst wurde,

Fig. 4 einen schematisch dargestellten Querschnitt einer mit einer erfindungsgemässen Mehrelektrodenanordnung geschweissten Schweissnaht bei in gleicher Weise vorbereiteten Nahtfugen wie in Fig. 3

Fig. 5 ein Diagramm über erzielbare Abschmelzleistungen bei Einsatz von Füllbändern.

Fig. 6 -8 Nahtvorbereitung, Elektrodenanordnung und Makroschliffbild für Beispiel 1 und

Fig. 7, 9 -12 Nahtvorbereitung, Elektrodenanordnung, Makro-und Mikrogefüge, Tabelle und Diagramm über Kerbschlagversuch für Beispiel 2.

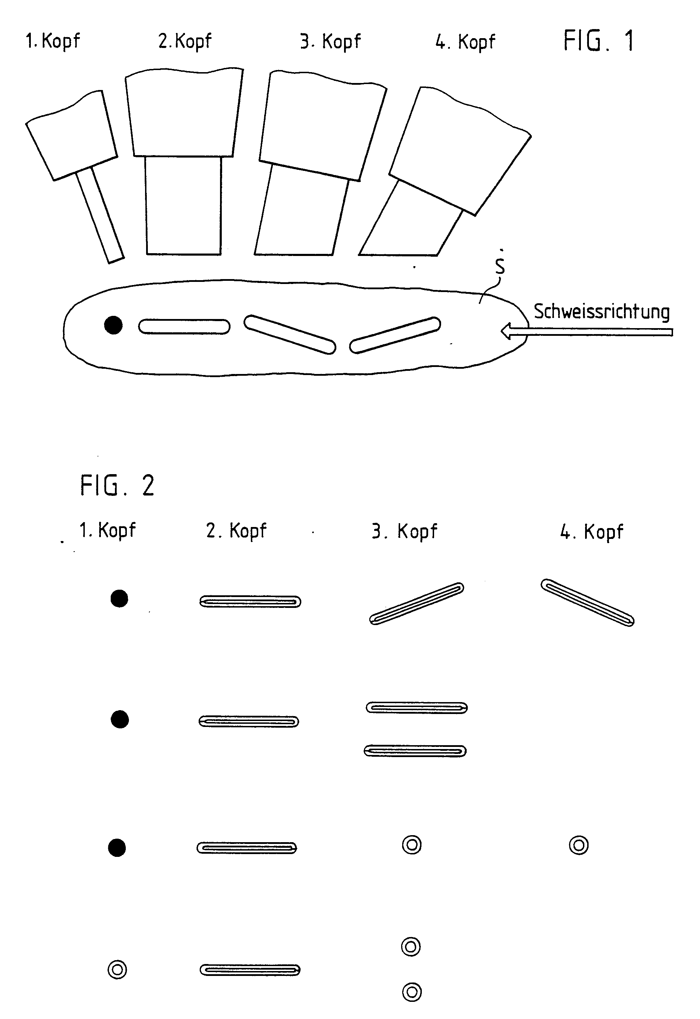

In Fig. 1 ist eine Mehrelektrodenanordnung dargestellt, bei welcher vier Schweissköpfe eingesetzt werden, wobei der erste Kopf einen Massivdraht und die anderen Köpfe Bandelektroden aufweisen. Wie aus dem Grundriss zu erkennen ist, sind in dem gemeinsamen, mit S bezeichneten Schweissbad die Bandelektroden des dritten und vierten Kopfes zur Schweissrichtung gebeugt angeordnet und weisen demnach gegenüber des Schweissrichtung einen Anstellwinkel auf, der je nach Andwendungsfall 0-90° betragen kann.

Die in Fig. 2 dargestellten Mehrelektrodenanordnungen zeigen eine kleine Auswahl möglicher Anordnungen. Die erste Elektrodenanordnung entspricht derjenigen in Fig. 1, während bei der zweiten Elektrodenanordnung am dritten Kopf zwei Bandelektroden in Parallelstellung angeordnet sind. Bei der dritten Elektrodenanordnung sind am zweiten Kopf eine Bandelektrode und am dritten und vierten Kopf je eine Fülldrahtelektrode angeordnet. In den drei genannten Elektrodenanordnungen ist am ersten Kopf eine Massivdrahtelektrode angeordnet.

Die am ersten Schweisskopf angeordnete Elektrode ist als kreisrunder Massivdraht oder Fülldraht ausgebildet, wobei dem Massivdraht, da er kostengünstiger ist, oft der Vorzug gegeben wird. Hierzu eignet sich ein Draht vom Legierungstyp S1 der Anmelderin. Aufgabe dieser Drahtelektrode ist es, durch Wahl geeigneter Schweissparameter einen genügend tiefen Einbrand sicher zu stellen, um speziell beim Schweissen in Lage und Gegenlage eine ausreichende Lagenüberschneidung zu gewährleisten. Das Schweissen kann an Gleichstrom (+ Pol) oder auch an Wechselstrom erfolgen.

Die am zweiten Schweisskopf angeordnete Bandelektrode verfügt über die erforderlichen Legierungselemente und ergibt damit ein entsprechend legiertes oder mikrolegiertes Schweissgut. Wird anstelle eines Massivbandes eine Füllbandelektrode am ersten Schweisskopf eingesetzt, wird der Wirkungsgrad verbessert und damit die Abschmelzleistung gesteigert. Zur zusätzlichen Steigerung des thermischen Wirkungsgrad kann ausserdem die Pulverfüllung des Füllbandes mit einem hohen Eisenpulveranteil ausgestattet sein. Durch die Legierungszusätze und die verschiedene Zusammensetzung der Bandfüllung können die mechanisch-technologischen Eigenschaften der Schweiss naht gesteuert werden.

Durch die Verwendung einer Bandelektrode an dem zweiten Schweisskopf und gegebenenfalls auch an den weiteren Schweissköpfen wird die Aufmischung des Schweissgutes aus dem Grundwerkstoff verringert und trägt dazu bei, den unter Umständen negativen Einfluss des Grundwerkstoffes auf die mechanisch-technologischen Eigenschaften der Schweissverbindungen klein zu halten. Soweit dies festgestellt werden konnte, erklärt sich die Ursache hierfür aus einem oder mehreren wandernden Lichtbögen an dem abschmelzenden Bandende, die zu einer wesentlichen Verringerung des Einbrandes im Grundwerkstoff führen.

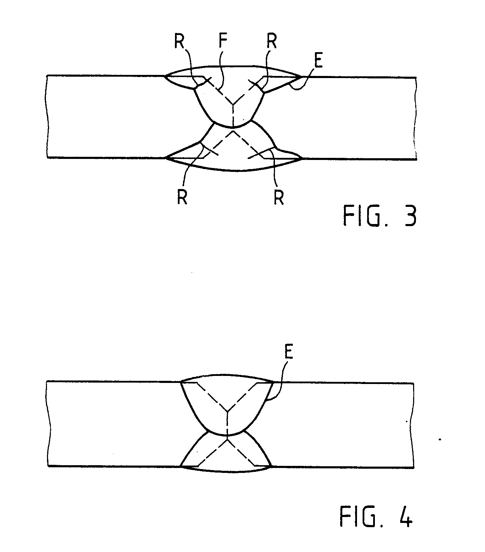

Es wird hier auf Fig. 3 und 4 verwiesen, die eine bildliche Darstellung der vorstehenden Ausführungen zeigen. Fig. 3 zeigt den Querschnitt einer Schweissnaht, die mit dem bekannten Mehrdrahtelektrodenverfahren geschweisst wurde. Das Einbrandprofil E weist Stellen R auf, in deren Bereich die Uebergangszone des Schmelzbereiches eine konkave, d.h. nach innen gewölbte Randpartie aufweist. Die Stelle R ist kritisch, da dort, offenbar als Folge einer Kerbwirkung, Mikrorisse entstehen können.

Im Gegensatz dazu zeigt der Querschnitt der Schweissnaht nach Fig. 4 keine solchen kritischen Stellen R im Abbrandprofil E, und die Randzone weist ausschliesslich konvexe, d.h. nach aussen gewölbte Randpartien auf. Es sei noch erwähnt, dass für die Verringerung der Aufmischung des Schweissgutes aus dem Grundwerkstoff zweckmässig die Bandelektrode in Schweissrichtung längs gestellt wird.

Die am dritten und ggf. vierten Schweisskopf angeordneten Elektroden dienen zum Füllen der Schweissfuge. In ihrer geometrischen Form können sie, siehe in Fig. 2 die vier Elektrodenanordnungen, als kreisrunde Drahtelektroden, z.B. als Fülldraht, oder als Massivband bzw. Füllband ausgebildet sein. Will man eine erhöhte Abschmelzleistung erreichen, ist ein Füllband mit hohem Füllungsgrad, d.h. mit erhöhtem Eisenpulveranteil, zu bevorzugen. Durch Wahl des Anstellwinkels gegenüber der Schweissrichtung lässt sich infolge veränderter Einbrandform die Nahtgeometrie steuern. Es kommen hierbei Bandanstellwinkel von 0 bis 90 Grad in Frage. Ausserdem kann bei Parallelanordnung der Draht-und insbesondere Bandelektroden, siehe die zweite und vierte Elektrodenanordnung in Fig. 2, in einem Stromkreis die Abschmelzleistung zusätzlich gesteigert werden.

Im Hinblick darauf, dass die Elektrode des zweiten Schweisskopfes über die erforderlichen Legierungselemente verfügt und damit das Schweissgut metallurgisch steuert, ist es zweckmässig, für die Elektroden des dritten und vierten Schweisskopfes unlegierte oder mittellegierte Drahtelektroden oder Bandelektroden bzw. Fülldrähte oder Füllbänder des Legierungstypes S1 zu verwenden.

Die erreichbaren Ergebnisse mit dem erfindungsgemässen Verfahren seien anhand zweier Beispiele näher erläutert, wobei Beispiel 1 sich auf das Schweissen einer Doppel-Y-Naht und Beispiel 2 auf das Schweissen einer Y-Naht bezieht, die in beiden Fällen durch eine 3-Elektrodenanordnung geschweisst wurde. Die verwendeten Daten sind unter Ziffer 2 zusammengestellt. In Beispiel 2 sind zudem under den Ziffern 4 und 5 Angaben über die Eigenschaften der Schweissnaht enthalten.

In beiden Beispielen ist unter Ziffer 3 erkennbar, dass das Einbrandprofil in der Uebergangszone zum Grundmaterial ausschliesslich durch konvex gewölbte Randpartien begrenzt ist.

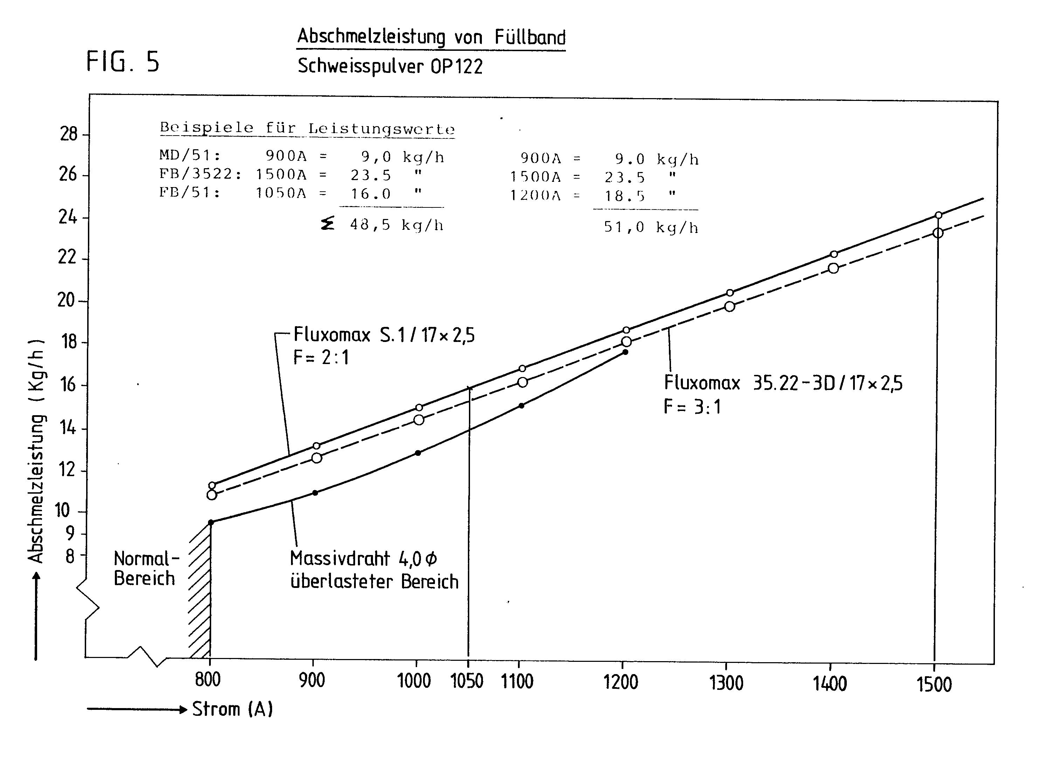

Schliesslich ist in Fig. 5 in einem Diagramm dargestellt welche Abschmelzleistungen mit dem erfindungsgemässen Verfahren erreicht werden können. Angegeben sind die Werte für 3 Elektroden, nämlich für einen Massivdraht MD/S1 und 2 Füllbänder FB/35.22 und S1. Der Massivdraht weist die geringste Abschmelzleistung auf, da der Schweissstrom nicht wesentlich über 800 A gesteigert werden kann. Dagegen können die beiden Füllbandelektroden wesentlich höher belastet werden.

Mit diesen drei Elektroden ergeben sich Abschmelzleistungen, die gegenüber den Abschmelzleistungen mit Mehrdrahtschweissungen höher liegen.

Es sei noch erwähnt, dass anstelle der Elektrodenanordnungen gemäss Fig. 2 auch am ersten Schweisskopf eine Bandelektrode eingesetzt werden kann, wenn die Erzielung eines besonders tiefen Einbrandes nicht erforderlich ist.

Die Vorteile des erfindungsgemässen Verfahrens lassen sich im Vergleich zu bekannten Mehrdrahtanordnungen wie folgt zusammenfassen:

-Die erreichbare Verringerung der erforderlichen Schweissgutmenge pro Meter Naht durch Verringerung des Nahtöffnungswinkels führt zur Erhöhung der Schweissgeschwindigkeit.

-Die Bandelektroden erlauben im Vergleich zu Drahtelektroden eine höhere Strombelastung des Schweiss pulvers. Dadurch kann durch geeignete Wahl der Schweissparameter die Abschmelzleistung erhöht und die Schweissgeschwindingkeit gleichzeitig gesteigert werden.

-Durch den hohen Eisenpulveranteil bei Verwendung von Füllbandelektroden, d.h. bei hohem Füllungsgrad, wird der thermische Wirkungsgrad verbessert. Als Folge hiervon ergibt sich eine weitere Steigerung der Abschmelzleistung sowie der Schweissgeschwindigkeit.

-Der Einsatz bandförmiger Elektroden ab dem zweiten Schweisskopf beeinflusst das Einbrandprofil. Die Nahtflanken können steiler ausgebildet werden, was eine günstige Aenderung der Kristallisationsfront bewirkt und die Gefahr für interdendritische Risse, siehe Fig. 3, verringert.

-Gegenüber den bekannten Mehrdrahtanordnungen ergeben sich beim Bandschweissen bei vergleichbarer Streckenenergie (eingebrachte Wärme) günstigere Kerbschlagwerte in der Wärmeeinflusszone (HAZ).

-Bei vergleichbarem Oeffnungswinkel führt insbesondere der reduzierte Flankeneinbrand zu geringerer Aufmischung durch den Grundwerkstoff. Hierdurch wird der unter Umständen negative Einfluss der Aufmischung im Schweissgut durch den Grundwerkstoff auf ein Minimum reduziert, was zur Stabilisierung der Kerbschlagzähigkeit beiträgt.

Beispiel 1

Schweissen in Lage und Gegenlage im Mehrelektrodensystem

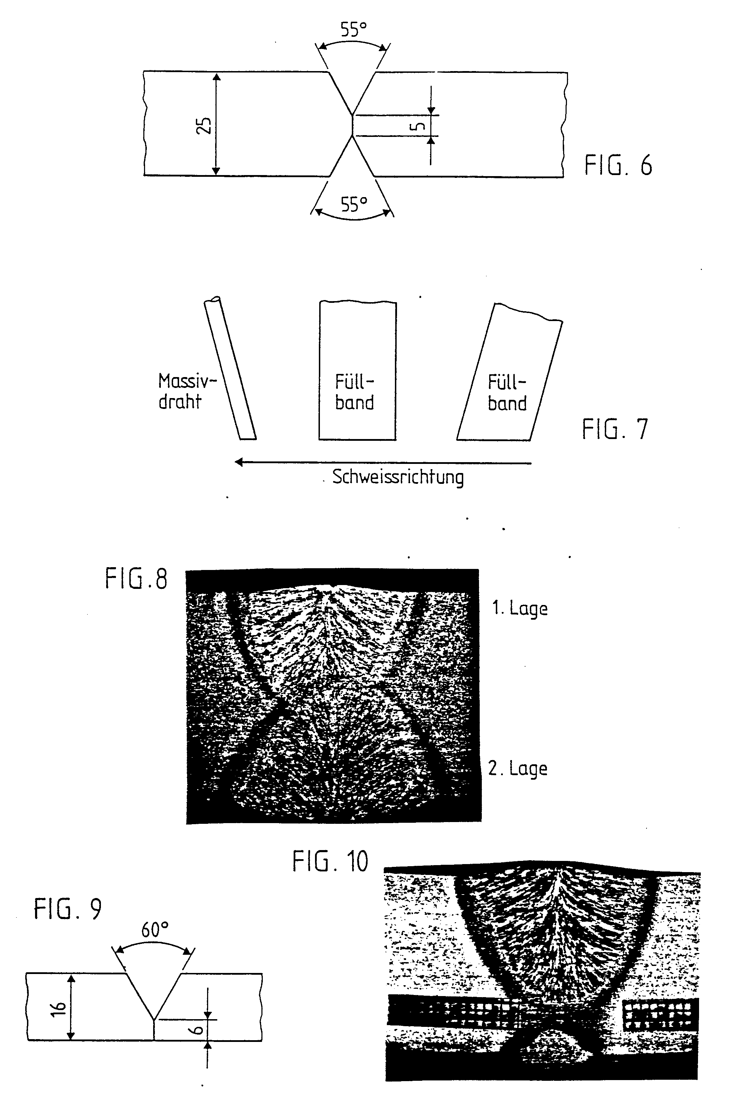

1. Nahtvorbereitung (siehe Fig. 6)
2. Anordnung der Draht-bzw. Füllbandelektroden / Schweissparameter (siehe Fig. 7)

|  | 1. Kopf | 2. Kopf | 3. Kopf |
|---|---|---|---|
| Schweisszusatz | OE-A 105 | FLUXOMAX 35.22-3 D | FLUXOMAX S1 |
| Abmessung | Ø 4,0 mm | 17 x 2,5 mm | 17 x 2,5 mm |
| Schweisspulver | OP 122 | OP 122 | OP 122 |
| Schweissparameter |  |  |  |
| I (A) | 930 | 1500 | 1200 |
| U (V) | 35 | 34 | 36 |
| $V_s$ | Raupe 1 150cm/min | | Raupe 2 145 cm/min |

3. Makroschliffbild (siehe Fig. 8)

Beispiel 2

Ueberprüfung der mechanisch-technologischen Eigenschaften einer 1-Lagen-Schweissung

1. Nahtvorbereitung (siehe Fig. 9)
2. Anordnung der Draht-bzw. Füllbandelektroden / Schweissparameter (siehe Fig. 7)

|  | 1. Kopf | 2. Kopf | 3. Kopf |
|---|---|---|---|
| Schweisszusatz | OE-A 105 | FLUXOMAX 35.22-3 D | FLUXOMAX S1 |
| Abmessung | Ø 4,0 mm | 17 x 2,5 mm | 17 x 2,5 mm |
| Schweisspulver | OP 122 | OP 122 | OP 122 |
| Schweissparameter |  |  |  |
| I (A) | 930 | 1500 | 1200 |
| U (V) | 35 | 34 | 36 |
| $V_s$ |  | 150 cm/min |  |

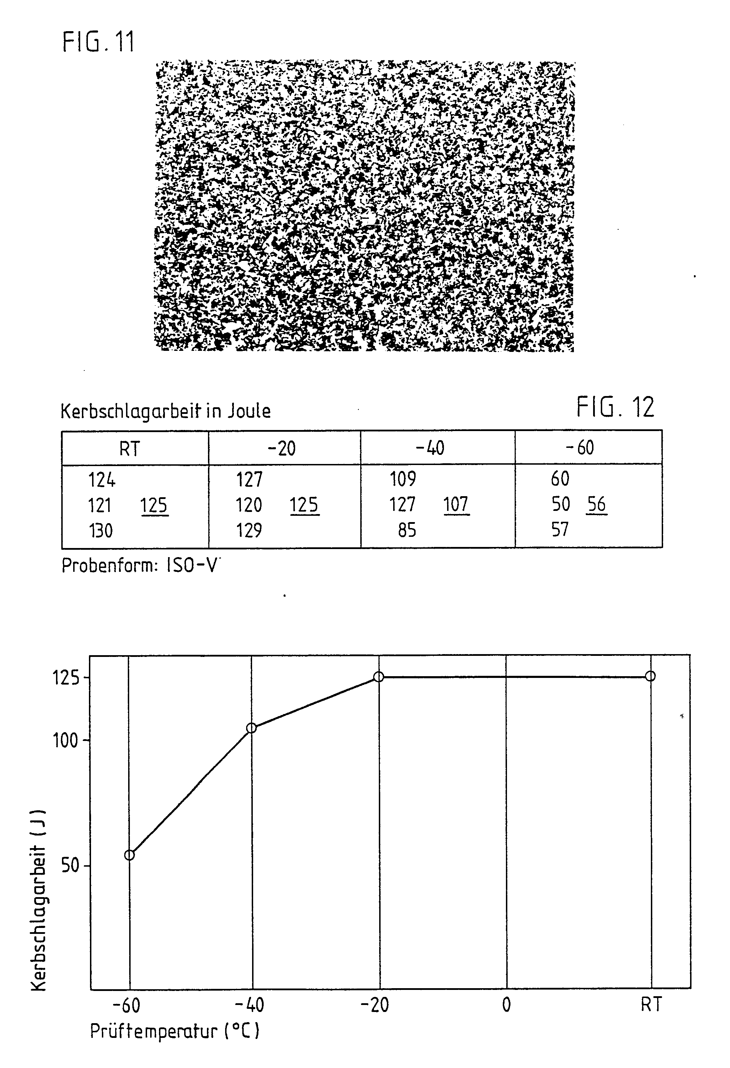

3. Makrogefüge (siehe Fig. 10)
4. Mikrogefüge (siehe Fig. 11)

M 200:1
5. Mechanisch-technologische Untersuchung
5.1 Schweissgutanalyse (%) (Quanto-Vac)

| C | Si | Mn | P | S | Cr | Mo | Ti | B |
|---|---|---|---|---|---|---|---|---|
| 0,122 | 0,24 | 1,50 | 0,021 | 0,019 | 0,27 | 0,10 | 0,02 | 0,002 |

5.2 Kerbschlagbiegeversuch gemäss DIN 50 115 (siehe Fig. 12)

**Ansprüche**

1. Verfahren zum Unterpulverschweissen von Nahtfugen an metallischen Werkstücken mittels Mehrelektrodenschweissung, bei welchem zwei oder mehr Elektroden hintereinander angeordnet werden, mit deren einzelnen elektrischen Lichtbogen gleichzeitig eine gemeinsame, von geschmolzenem Schweisspulver überdeckte Schmelzzone gebildet wird, dadurch gekennzeichnet, dass in der jeweils gewählten Elektrodenanordnung mindestens eine als Bandelektrode ausgebildete Elektrode angeordnet wird.

2. Verfahren nach Anspruch 1, dadurch gekennzeichnet, dass die Bandelektrode als Füllband mit einer im Bandinnern eingebrachten Pulverfüllung ausgebildet wird.

3. Verfahren nach Anspruch 1 oder 2, dadurch gekennzeichnet, dass -in Schweissrichtung gesehen -als erste Elektrode eine Draht-oder Bandelektrode eingesetzt wird, während alle nachfolgenden weiteren Elektroden als Füllbänder oder Massivbänder ausgebildet werden.

4. Verfahren nach Anspruch 1 oder 2, dadurch gekennzeichnet, dass als erste Elektrode ein Fülldraht eingesetzt wird, während alle nachfolgenden weiteren, z.B. 2 Elektroden als Füllband ausgebildet werden.

5. Verfahren nach einem der Ansprüche 1 bis 4, dadurch gekennzeichnet, dass als erste Elektrode ein Massivdraht oder ein Fülldraht angeordnet wird, während nur für die zweite Elektrode ein Füllband und für die weitere Elektrode bzw. weiteren Elektroden ein Massivdraht und/oder ein Fülldraht eingesetzt wird bzw. werden.

6. Verfahren nach einem der Ansprüche 1 bis 5, dadurch gekennzeichnet, dass mindestens eine Füllbandelektrode als legierte, z.B. als mikrolegierte Elektrode ausgebildet wird.

7. Verfahren nach einem der Ansprüche 1 bis 6, dadurch gekennzeichnet, dass die Längsachse der Bandelektrode bzw. Bandelektroden schräg zur Schweissrichtung angestellt wird bzw. werden, z.B. in einem Bereich von 0 -90 Grad.

8. Verfahren nach einem der Ansprüche 1 bis 7, dadurch gekennzeichnet, dass die Füllung der Füllbandelektrode mit einem Eisenpulveranteil von 30 -90 % Gewicht der Füllung erfolgt.

9. Verfahren nach einem der Ansprüche 1 bis 8, gekennzeichnet durch ein Einbrandprofil, das eine Uebergangszone mit ausschliesslich konvex gewölbten Rändern

10. Verfahren nach Patentanspruch 9, gekennzeichnet durch eine Verringerung des üblicherweise 60 Grad betragenden Nahtöffnungswinkels bei Y-oder Doppel-Y-Naht auf 50 -55 Grad, mit einer entsprechenden Verringerung der Schweissgutmenge.

# FIG. 1

1. Kopf    2. Kopf    3. Kopf    4. Kopf

S

Schweissrichtung

# FIG. 2

1. Kopf    2. Kopf    3. Kopf    4. Kopf

R  F  R  E

FIG. 3

E

FIG. 4

**FIG. 5**

Abschmelzleistung von Füllband
Schweisspulver OP122

Beispiele für Leistungswerte

| | | | | | |
|---|---|---|---|---|---|
| MD/51: | 900A = | 9,0 kg/h | 900A = | 9.0 kg/h |
| FB/3522: | 1500A = | 23.5 " | 1500A = | 23.5 " |
| FB/51: | 1050A = | 16.0 " | 1200A = | 18.5 " |
| | ≦ | 48,5 kg/h | | 51,0 kg/h |

Abschmelzleistung ( Kg/h )

Fluxomax S.1 / 17 × 2,5
F = 2 : 1

Fluxomax 35.22 - 3D / 17 × 2,5
F = 3 : 1

Normal-
Bereich

Massivdraht 4,0 ⌀
überlasteter Bereich

Strom (A)

0 220 561

FIG. 6

Massiv-draht  Füll-band  Füll-band

Schweissrichtung

FIG. 7

FIG.8

1. Lage

2. Lage

FIG. 10

FIG. 9

FIG. 11

Kerbschlagarbeit in Joule          FIG. 12

| RT | | −20 | | −40 | | − 60 | |
|---|---|---|---|---|---|---|---|
| 124 | | 127 | | 109 | | 60 | |
| 121 | 125 | 120 | 125 | 127 | 107 | 50 | 56 |
| 130 | | 129 | | 85 | | 57 | |

Probenform: ISO−V

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 304 432 (KOBE STEEL LTD)<br><br>* Seite 3, Zeile 24 - Seite 5, Zeile 7; Seiten 25,26; Seite 29, Zeile 10 - Seite 30, Zeile 34; Abbildungen 6,9 *<br><br>--- | 1-4,6-10 | B 23 K 9/18 |
| X | PATENTS ABSTRACTS OF JAPAN, Band 7, Nr. 74 (M-203)[1219], 26. März 1983; & JP-A-58 3789 (MITSUBISHI JUKOGYO K.K.) 10-01-1983<br>* Das ganze Dokument *<br><br>--- | 1-3 | |
| A,D | EP-A-0 116 664 (SCHWEISSINDUSTRIE OERLIKON BÜHRLE AG)<br>* Das ganze Dokument *<br><br>----- | 1,3-7, 10 | |
| | | | RECHERCHIERTE SACHGEBIETE (Int. Cl.4) |
| | | | B 23 K |

Der vorliegende Recherchenbericht wurde für alle Patentansprüche erstellt.

| Recherchenort | Abschlußdatum der Recherche | Prüfer |
|---|---|---|
| DEN HAAG | 19-01-1987 | ARAN D.D. |